# EUROPEAN PATENT SPECIFICATION

(11) **EP 2 706 230 B1**
(45) Date of publication and mention of the grant of the patent: **23.12.2015**
(21) Application number: 13182936.8
(22) Date of filing: 04.09.2013
(51) Int. Cl.: H02P 9/14, F03D 7/02

(54) **Turbine and control system of the over-power of said turbine**
Turbine und Kontrollsystem der Überleistung der Turbine
Turbine et système de contrôle de la surcharge de cette turbine

(30) Priority: 04.09.2012 IT VR20120178
(43) Date of publication of application: 12.03.2014
(73) Proprietor: Penta Systems S.r.l., 37030 Badia Calavena (VR) (IT)
(72) Inventor: Cattano, Aldo, 37030 Badia Calavena (VR) (IT)
(74) Representative: Fisauli, Beatrice A. M.

(56) References cited:
- US-A1- 2002 105 189
- US-A1- 2006 249 957
- US-A1- 2010 038 909
- US-A1- 2012 061 966
- US-B1- 6 809 431

## Description

The present invention refers, in general, to a turbine and to a control system for controlling the overpower of said turbine.

As is known, the exploitation of wind energy is implemented by means of special turbines which, in general, have a rotor with a vertical axis or with a horizontal axis relative to the ground.

The choice of the turbine to be used in a specific application depends on a series of factors which are to be considered when studying the plant, such as the particular distribution of the wind in the place of installation.

In general, the horizontal axis turbines have proved to be the best choice for the exploitation of wind energy while the configuration with a vertical axis is confined to cases in which there are special conditions such as size limits or other.

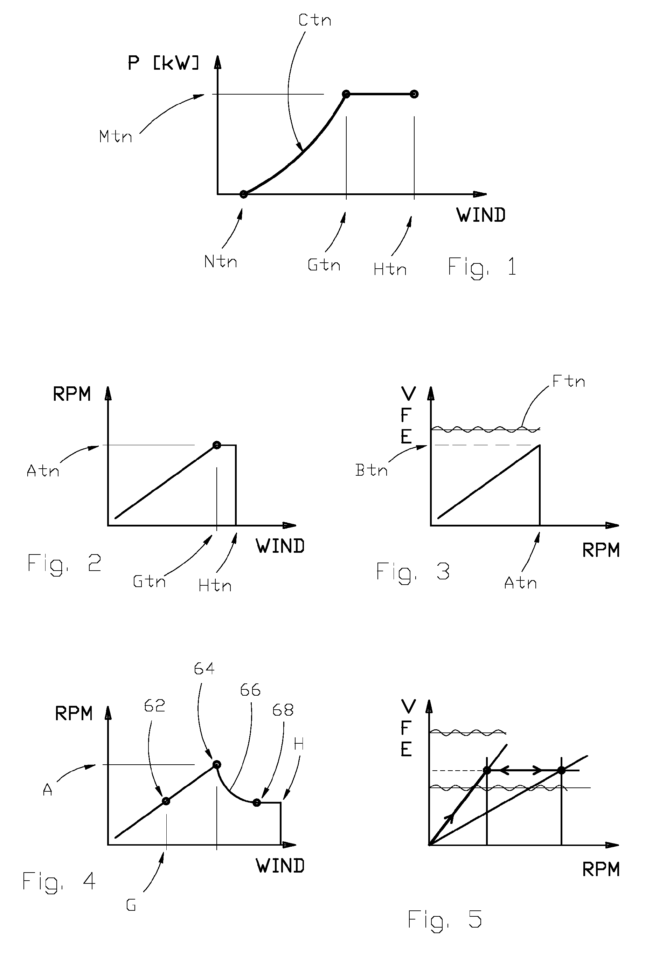

The behavior of the known horizontal axis turbines is described below with reference to figures 1, 2 and 3.

In the horizontal axis turbines, the rotor blades are connected to the shaft of an electric generator coupled electromagnetically with a stator so as to obtain an electric current from the relative rotation of the rotor relative to the stator. The higher the speed of rotation of the rotor (indicated with RPM on the abscissa in figure 3), the greater the voltage obtained (indicated with a continuous line and a V on the ordinate). The known electric generators have a magnetic field between stator and rotor which has a characteristic magnetic flux Fₜₙ.

Below, the subscript "tn" indicates the parameters and the values that refer to the prior art.

Constructive limits of the rotor and electrical limitations of the components impose the maximum speed of rotation Aₜₙ and the maximum voltage Bₜₙ, respectively, with which the wind turbine can operate to convert the wind energy into electrical energy.

According to the constructive typology of the horizontal axis turbine considered in the project, this turbine will present a specific characteristic operation depending on the speed of the wind the turbine is subjected to, as it appears from figure 1. For the evaluation of this characteristic operation, it is possible to represent the output electrical power (indicated in P) as a function of the speed of the wind (indicated in WIND) striking the blades of the turbine in order to obtain the so-called power curve Cₜₙ.

The representation of the power curve Cₜₙ is useful to identify the sector of utilization of each typology of turbine. Indeed, each wind turbine has its own unique power curve through which the turbine is classified primarily on the base of three fundamental parameters: cut-in speed Nₜₙ, rated speed Gₜₙ and cut-out speed Hₜₙ.

In fact, the known horizontal axis turbines according to their construction and control system adopted have a cut-in speed Nₜₙ that corresponds to the wind speed with which the turbine begins to produce electrical energy.

The rated speed Gₜₙ indicates the minimum wind speed with which the turbine begins to produce its own rated power Mₜₙ.

Finally, the cut-out speed Hₜₙ is the wind speed chosen during the design phase as maximum speed beyond which the turbine should not operate in order to avoid damages.

The control systems carried out according to the known art try to improve the performance of wind turbines from cut-in speed Nₜₙ to cut-out speed Hₜₙ.

For instance, in order to reduce the cut-in speed Nₜₙ, it is possible to take advantage of the energy from the network to start the rotation of the turbine blades. In this way, the generator is used as an electric motor for a first transitional.

In the sector of the wind speeds included between the cut-in speed Nₜₙ and the rated speed Gₜₙ, the control system usually allows to rotate the shaft of the rotor of the wind turbine at the optimum speed of rotation relative to the instantaneous speed of the wind. The optimum speeds are predetermined experimentally and the control is performed according to known methods.

In the sector of the wind speeds included between the rated speed Gₜₙ and the cut-out speed Hₜₙ, further constructive elements and relative controls are utilized to try to increase the cut-out speed Hₜₙ in order to take advantage of winds in a wider range of speeds.

A typology of control utilized in the known turbines introduces a mechanism for the orientation of the axis of rotation of the rotor relative to the direction of the wind. This orientation mechanism is known as yaw mechanism. This mechanism imposes a rotation of the turbine around an axis perpendicular to the ground, which allows the rotor to operate with its own axis of rotation no more parallel to the direction of the wind. In this way, the rotor can operate with stronger winds but with a lower aerodynamic efficiency.

Besides, this type of control needs an additional motor to keep the offset between axis of rotation of the rotor and direction of the wind constant and controlled, which complicates consequently the construction of the whole machine owing to the presence of the additional motor, the relative sensors and the control management that has to constantly follow the variations of direction and intensity of the wind.

Another known mode for controlling the power converted by a wind turbine is the variation of the pitch angle of the rotor blades by modifying the aerodynamic behavior of each blade on the base of the wind speed. Once the rated power Mₜₙ supplied has been achieved, such power is kept constant even in case of an increase in the wind speed through the variation of the pitch angle so as to obtain the behavior of figure 1. The variation of the pitch angle reduces in proportion the lift of the blade in an attempt to keep constant the torque developed by the rotor.

However, also this type of control causes a further complexity to the machine because it is necessary to continuously control the variation of the pitch angle with motorized means that have to be monitored and controlled actively.

In addition, said motorized means to be utilized to control both the pitch angle and the orientation of the rotor axis absorb a part of the electrical power that could be supplied by the network on lowering the efficiency of the whole machine.

With reference to figure 2, a further method to control and limit the rotor speed is to take advantage of the control capacity of an inverter that is an electrical component already provided to convert the electricity supplied by the generator in a form acceptable by the electrical network of destination.

By varying the operative conditions of the inverter through an active control, the electrical load imposed on the generator can be modified on affecting, consequently, the speed of rotation of the rotor blades.

In case of a strong wind having a speed greater than the rated speed Gₜₙ, which would lead the rotor to increase its speed of rotation over the maximum speed of rotation Aₜₙ. The controller of the inverter requests a higher current for the generator, this request being considered by the rotor as a request of greater torque provided. In this way, the rotor is electrically braked and slowed, which prevents the number of revolutions per minute (below RPM) of the machine to overcome the maximum rotation speed Aₜₙ.

US 2006/0249957 A1 shows a method for controlling the power converted by a wind turbine with fixed-pitch angle blades by short-circuiting the output of the generator.

US 2012/0061966 A1 shows a method for controlling the power converted by a wind turbine with fixed-pitch angle blades by intermittently short-circuiting the armature coil of the generator.

The reduction of RPM of the rotor may not be maintained for a long time but only for a short time, for instance in the order of a few minutes, and in any case for wind speeds (indicated with Hₜₙ) slightly higher than the rated speed Gₜₙ. The limited time of use of this typology of control is due to the risk that the generator overheats up to burn or melt owing to its operation at a higher power than the rated power.

Accordingly, each control according to the known technique must bring to higher powers than the power limit, and/or in the presence of wind speeds higher than the cut-out speed Hₜₙ, stop the turbine in order to prevent damages to the whole machine. The braking is conventionally performed by utilizing suitable mechanical or electrical braking means.

Once the turbine has been stopped, the turbine may restart only when there are favorable wind conditions for the operation of the turbine. Besides, it will be necessary to wait the time it takes to restart the turbine and, if necessary, to request energy once again to the electrical network in order to facilitate the restart operation.

Hence, the control systems carried out according to the prior art can not guarantee an optimum continuous operation of the turbine in case of variable winds. In particular, in case of strong winds overcoming the rated speed Gₜₙ of operation of the turbine, the efficiency of the energy conversion of the turbine reduces more and more up to the cut-out speed Hₜₙ so that it is necessary to stop the rotor on dispersing much energy in the ambient, which energy could be otherwise supplied to the electric system.

An aim of the present invention is to carry out a turbine and a control system to control the overpower of said turbine in order to overcome the problems and disadvantages of the turbines and systems of the prior art.

Another aim of the present invention is to carry out a turbine and a control system to control the overpower of said turbine in order to reduce the dispersion of energy in the ambient during its operation.

A further aim of the present invention is to carry out a turbine and a control system which do not need complex control mechanisms which in turn absorb a part of the electric energy supplied by the generator utilized in the turbine.

These aims and further aims are reached according to the invention by a control method for a turbine having a determined rated speed and comprising a rotor unit coupled to a generator which in turn is controlled by a control unit. Said control method is adapted to adjust the speed of rotation of the turbine according to the wind speed investing the rotor unit and comprises the following stage:
- when the rotor unit is invested by a wind having speeds higher than the rated speed, control the operation of the generator by means of the control unit by imposing a reduction of the speed of rotation of the rotor unit proportional to the increase of the wind speed, continuously.

Through such a control, it is possible to control a turbine when it is subjected to a wind having speeds higher than the rated speed of the turbine. By imposing a reduction on the speed of rotation of the rotor unit proportional to the increase of the wind speed, the control unit actuates the rotor unit at rotation speeds that deviate more and more from the rotation speed that the rotor unit would assume if the rotor unit were left free of following the increase in wind speed.

Through said control it is possible to vary the behavior of the turbine in order to expand the scope of operation so that the turbine may operate with winds blowing at a speed higher than the rated speed.

In fact, by reducing the speed of rotation of the rotor unit it is possible to vary the operating conditions of the turbine and to allow the turbine to operate in stable conditions of lower aerodynamic efficiency.

The control method of a turbine is characterised in that it comprises the following stages:
- in a first operating field, when the rotor unit is invested by a wind having speeds included between the cut-in speed (corresponding to the wind speed at which the turbine begins to produce electric energy) and the wind speed that puts the rotor unit in rotation at its maximum speed of rotation, the control unit imposes a determined speed of rotation of the rotor unit according to the wind speed optimizing the aerodynamic efficiency of the turbine;
- in a second operating field, when the rotor unit is invested by a wind having speeds included between the wind speed that would put the rotor unit in rotation at its maximum speed of rotation and speeds higher than this, the control unit requires a greater amount of electric energy to the generator than the electric energy that the generator may supply in that moment so as to slow the rotor of the generator and, consequently, to slow the rotor unit up to a predetermined rotation speed lower than the maximum speed of rotation of the rotor unit.

Through said different controls in each operating field, it is possible to optimize the aerodynamic efficiency of the turbine in the first operating field while in the second operating field the rotor unit is arranged to work with an aerodynamic efficiency lower than the optimum aerodynamic efficiency. The lower aerodynamic efficiency in the second operating field allows to actuate the turbine with wind speeds that would otherwise be too high if the aerodynamic efficiency would be optimized, which would inevitably lead to a block of the turbine, as it occurs in the known turbines.

The rotor unit comprises one or more blades having a fixed pitch angle. Besides, when the rotor unit is invested by a wind having a speed higher than the rated speed, the one or more blades may be actuated according to a speed of rotation of the rotor unit that reduces the lift of the one or more blades. ;! In this way, the simple construction of a blade with fixed pitch angle allows to obtain a continuous operation of the turbine since it is not necessary to stop the turbine in case of strong winds.

The reduction of the lift of the one or more blades involves a reduction of the aerodynamic efficiency, which allows for instance to keep constant the power and/or the torque at which the generator operates, even as the wind speed further increases. When the rotor unit is invested by a wind having speeds higher than the rated speed, the control unit may reduce the speed of rotation of the rotor unit as the wind speed increases so as to keep constant the power produced by the turbine.

In this way, once the maximum power possible to manage with the turbine has been reached, it is possible to maintain it constant even as the wind speed increases further extending the range of use of the turbine according to the invention.

Besides, when the rotor unit is invested by a wind having speeds higher than the rated speed, the control unit may impose a speed of rotation that maintains constant the torque to which the generator is subjected, so as to reduce the speed of rotation of the rotor unit as the wind speed increases.

In this way, once the wished torque possible to manage with the generator or the maximum torque determined by other components of the turbine has been reached, it is possible to maintain it constant even as the wind speed increases further extending the range of use of the turbine according to the invention.

Advantageously, the constant torque to which the generator is subjected may be close or equal to the maximum torque withstood by the rotor unit and/or the generator.

In this way, once the maximum torque possible to manage with the generator has been reached, it is possible to maintain it constant even as the wind speed increases further extending the range of use of the turbine according to the invention.

In addition, the control unit may impose a speed of rotation that maintains constant the torque to which the generator is subjected by means of torque pulses so as to utilize the turbine components useful to the generation of torque pulses, for instance requesting a greater amount of current through the rectifier or the inverter or utilizing one or more mechanical brakes.

The rotor unit comprises one or more blades having a constant section so as to present an only stall limit angle of attack for all the sections in order to present a progressive stall as the wind speed increases.

Said features allow a progressive stalling of the parts of the one or more blades having a constant section. In this way, it is possible to avoid abrupt variations in torque to which, otherwise, the rotor unit and the generator would be subjected. Said abrupt variations in torque could make the control system unstable.

Besides, as the wind speed increases, the angle of attack may exceed the stall limit angle of attack in sections of the one or more blades closer and closer to its/their tip so that the sections of the one or more blades having a constant section for at least one portion of its/their length stall proportionally to the increase in wind speed on avoiding abrupt variations in torque and/or power to which the rotor unit is subjected.

The sections of the one or more blades are constant for its/their whole length so as to obtain a uniform behavior for its/their whole length on avoiding abrupt variations in torque and/or power.

In addition, the magnetic flux between stator and rotor may be predetermined and fixed so as to obtain an optimal behavior on simplifying the control of the turbine.

All the aims are also achieved by a turbine which is suitable to supply electric energy to a network by turning the wind energy obtained from the surrounding wind into electric energy, and comprises:
- a tower bound to soil;
- a nacelle, rotatably coupled to the end of the tower;
- a generator contained in the nacelle and coupled to a rotor unit;
- a control unit, electrically connected to the generator and the network.

The generator comprises a stator and a rotor, the stator and the rotor being magnetically coupled by a magnetic flux. The stator of the generator is bound to the nacelle. The rotor of the generator is mechanically coupled to the rotor unit. In addition, the rotor unit is fluid-dynamically coupled to the wind.

In addition, the turbine comprises control means to control the speed of rotation of the rotor unit according to the speed of the wind investing the turbine.

The turbine comprises one or more blades having a fixed pitch angle and constant section for at least one portion of the length of the one or more blades.

Said construction allows to obtain a turbine of simple construction that has an optimal behavior stability due to the progressive behavior of the sections where these sections are constant.

The one or more blades may have a constant section so as to present an only stall limit angle of attack for all the sections on obtaining thus a progressive stall as the wind speed increases.

In addition, as the wind speed increases, the angle of attack may exceed the stall limit angle of attack in sections of the one or more blades closer and closer to its/their tip so that the sections of the one or more blades having a constant section for at least one portion of its/their length stall proportionally to the increase in wind speed on avoiding thus abrupt variations in torque and/or power to which the rotor unit could be otherwise subjected.

The turbine is characterised in that the sections of the one or more blades have a constant sections for its/their whole length so as to obtain a progressive behavior for the whole length of the one or more blades.

Further features and details of the invention will be better understood from the following description which is supplied as a non-limiting example as well as from the accompanying drawings wherein:
Figures 1, 2 and 3 are three graphs representing the behavior of a turbine carried out according to the prior art;
Figure 4, 5 are two graphs representing the behavior of a turbine carried out according to the invention;
Figure 6 is a schematic view of a turbine connected to the network and carried out according to the invention;
Figure 7 is a schematic view of some components arranged inside the turbine in Fig. 6;
Figure 8 is a schematic view of other components of the turbine in Fig. 6;
Figure 9 is a graph representing the behavior of a turbine and a method for the control of the overpower of said turbine according to the invention;
Figures 10, 11 are two schematic diagrams representing the aerodynamic behavior of a blade of a turbine according to the invention;
Figures 12 to 15 are four graphs representing the behavior of a turbine and a control method for the control of the overpower of said turbine, according to the invention.

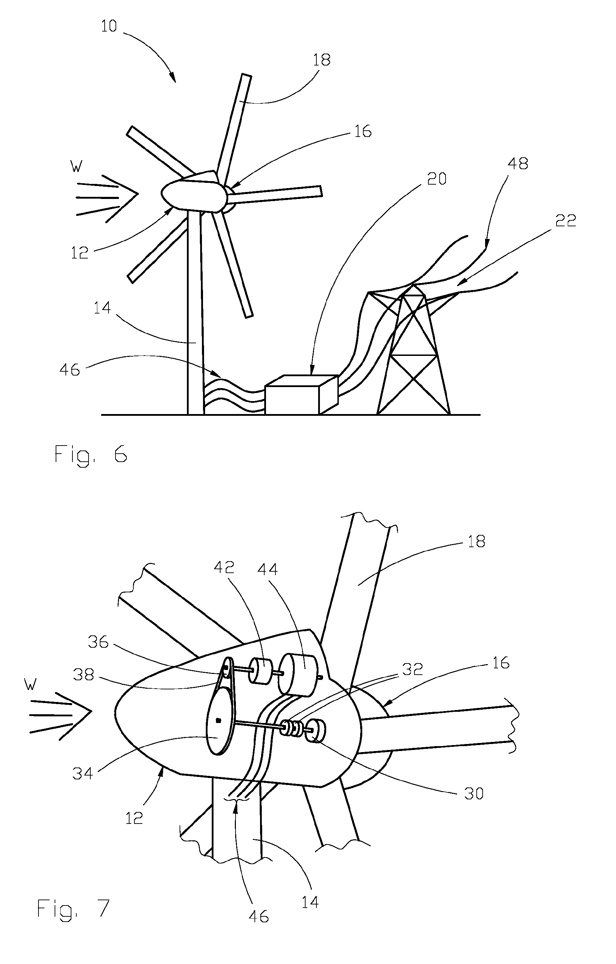

With reference to the accompanying drawings, in particular Figures 6 and 7, reference number 10 denotes a wind turbine comprising a nacelle 12 which is connected rotatably to an end of a tower 14 by means of a fifth wheel, not visible in the drawing, so as to allow the rotation of the nacelle 12 on aligning the nacelle to the wind direction W.

A sensor is coupled to the fifth wheel, not visible in the drawing, to detect the yaw angle of the nacelle 12.

A rotor unit 16 is coupled to the nacelle 12. The rotor unit 16 in turn comprises five blades 18 of which only one is represented in Figure 6.

The turbine 10 is carried out according to a downwind configuration so that at first, the wind W invests the nacelle 12 and then, the five blades 18.

Of course, the number of blades may be different from five and the configuration of the turbine may be upwind.

The turbine 10 is electrically connected to a control unit 20 which in turn is electrically connected to the destination network 22 of the electric energy generated by the turbine 10.

As it appears from Figure 7, the rotor unit 16 inside the nacelle 12 is connected to a hub 30, connected in cascade to two electromechanical brakes 32 and a first pulley 34.

The first pulley 34 is coupled to a second pulley 36 through a belt 38. The second pulley 36 is connected to a generator 44 through a revolution multiplier 42.

Preferably, the revolution multiplier 42 is a planetary gearbox and the generator 44 is an asynchronous electric machine equipped with permanent magnets.

The presence of the belt 38 allows to isolate the revolution multiplier 42 and the generator 44 from the vibrations arising from the interaction of the wind W with the blades 18 of the turbine 10.

Three electric cables 46 connect the generator 44 to the control unit 20 while three additional electric cables 48, visible in Figure 6, allow to connect the control unit 20 to the network 22.

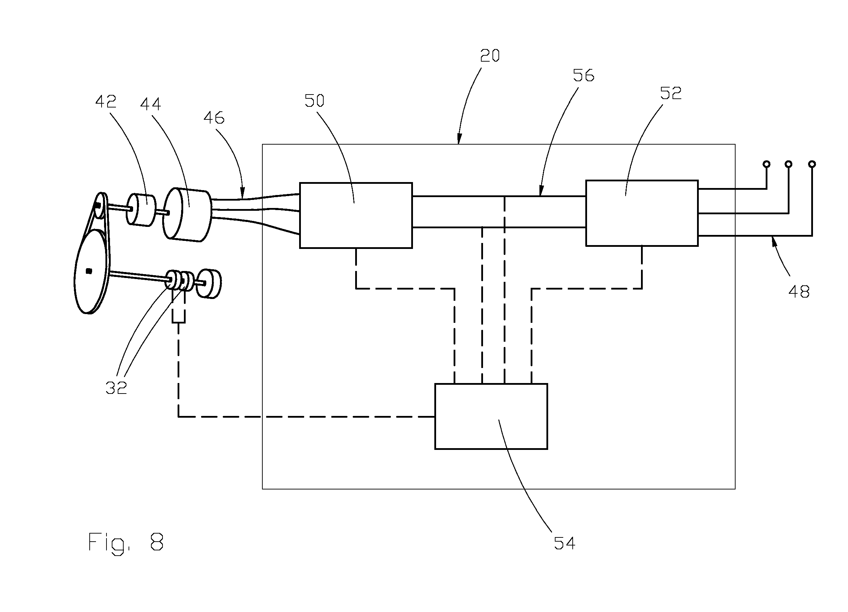

With reference to Figure 8, the control unit 20 comprises a rectifier, an inverter 52 and a controller 54. The controller 54 is operatively connected to the rectifier 50, the inverter 52 and two electromechanical brakes 32 in order to control the operation of these components as described below. Of course, the controller 54 may be operatively connected also to other components of the turbine 10 in order to control the operation of same.

The rectifier 50 is electrically connected to the inverter 52 by means of a direct current bus 56 hereinafter called DC bus 56.

Since the controller 54 controls the rectifier 50 and the inverter 52, the controller 54 may vary actively the current passing in the stator of the generator 44, in order to modify its behavior in the modes according to the invention. The controller 54, for instance by means of a Field Weakening algorithm or weakening algorithm, may modify the magnetic flux between stator and rotor of the generator 44. The control of the controller 54 may be a vector control, for instance according to the system utilized in the controls of electric motors in feedback.

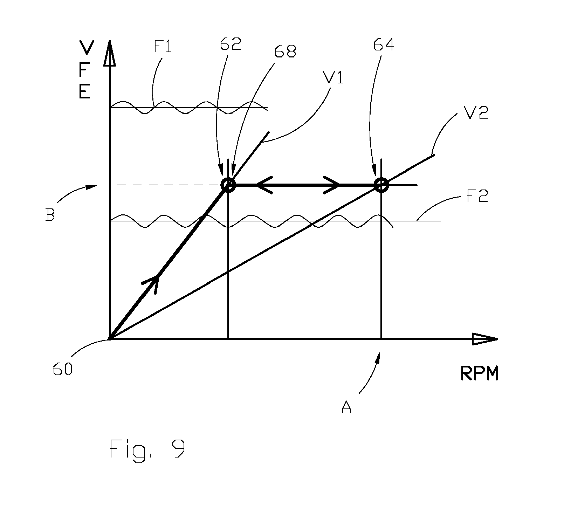

The operation of an overpower control in a turbine according to the invention is described below by using, for ease of exposition, the figures and the references utilized above with particular reference to Figure 9.

Through the above measures relating to the controller 54, the generator 44 may vary the magnetic flux coupling stator and rotor continuously on taking two values of the magnetic flux, indicated with F1 and F2 in Figure 9, or others. For instance, the magnetic flux F1 may be the maximum magnetic flux that can be imposed in the generator 44.

For ease of exposition, only two values of the magnetic flux have been represented. These two values indicate a behavior of the generator 44, respectively. In case the magnetic flux corresponds to value F1, the behavior of the generator 44 follows a first operating curve V1. In case the magnetic flux corresponds to value F2, the behavior of the generator 44 follows a second operating curve V2.

It is evident that the controller 54 may dispose the generator 44 to work according to additional magnetic flux values different from F1 and F2 and consequently, according to additional operating curves different from V1 and V2.

In the absence of wind, the rotor unit 16 is stationary and the turbine 10 is in an idle state as represented in 60. The controller 54 imposes the magnetic flux F1 to the generator 44, as indicated in Figure 9. The sensor detecting the yaw angle of the nacelle 20 is active. The two electromechanical brakes 32 are closed so as not to consume energy.

When the wind begins to grow in intensity, the direction of the wind usually is not parallel to the axis of rotation of the rotor unit 16 and therefore, the nacelle 20 rotates and the sensor detecting the yaw angle communicates the variation to the controller 54 by sending a signal of variation of the yaw angle to the controller 54.

When the controller 54 receives the signal of a variation of the yaw angle beyond a predetermined limit, the controller 54 controls the opening of the two electromechanical brakes 32 and the rotor unit 16 is started by using the generator 44 as if it were a motor in order to achieve the suitable RPM allowing the rotor unit 16 to continue to rotate by taking advantage only of the thrust of the wind W.

At this point, the generator 44 ceases to operate as motor and operates as generator and begins to produce electric energy. In case the RPM decrease to the point of stopping the rotor unit 16, for instance in case of an insufficient wind W, the controller 54 restarts the above described procedure after a predetermined time.

If the rotor unit 16 continues to slow to the point of stopping and the variation of the yaw angle is no more detected, the two electromechanical brakes 32 are closed. This control procedure allows to maintain the energy consumption low.

In case the turbine 10 begins to maintain the rotation state only with the thrust of the wind W, the system follows a first part of power curve C preset in the controller 54, similar to that in Figure 1.

Concerning the speeds of wind W included between the cut-in speed N and the nominal speed G, a certain power to be absorbed for an optimization of the performance of the turbine 10 corresponds to each RPM of the rotor unit 16.

When the turbine 10 reaches the level of the nominal power M, the electrical limits of the components of the turbine 10 are near, for instance near the maximum voltage limit B, as indicated in Figure 9.

If the speed of wind W continues to increase and overcomes the nominal speed G as represented in Figure 4, the controller 54 may command the operation of the generator 44 with a magnetic flux different from F1 and vary the intensity continuously.

As visible in Figure 9, beginning from point 62 it is possible to maintain the maximum voltage B on increasing at the same time the RPM of the rotor unit 16 so as to reach the maximum speed of rotation A in the point 64 of the operating curve V12 corresponding to the magnetic flux F2 having an intensity lower than F1.

In case the speed of the wind W continues to increase and consequently, the rotor unit 16 tends to increase the RPM, the controller 54 commands the rectifier 50 and the inverter 52 to request an amount of current greater than the amount of current that the generator 44 can supply to the point 64.

The slowdown occurs by using the generator 44 as an electromagnetic brake, which involves a significant increase in torque. For instance, a generator 44, utilized in some tests, can reach a braking torque of 4000 Nm, sustained for a few minutes.

A part of the energy produced is supplied to the network and the remaining energy is dissipated by a special braking resistor.

In this way, it is possible to reduce the RPM of the rotor unit 16 and, consequently, of the generator 44, by following the curve 66, visible in Figure 4, which indicates the reduction of RPM as the speed of the wind W increases on maintaining the power produced by the turbine constant so as to reach the operating point 68, as it appears from Figures 4 and 9.

Even in the presence of high speeds of the wind W, the turbine 10 has to operate with RPM which are lower and close to those that are reached by the turbine when the rated speed G is reached.

The controller 54 has the generator 44 to work with a higher magnetic flux so as to return to F1 and work on the curve V1.

Said peculiarity allows the turbine 10 according to the invention to process also winds blowing at speeds much higher than those of the cut-out speed Hₜₙ characteristic of known turbines having a rated power comparable to the turbine 10 according to the invention on maintaining the output rated power constantly. In addition, a continuous operation is obtained also in the presence of strong winds.

Accordingly, the rated power is kept constant by increasing the torque and decreasing the RPM. As described below, the decrease in RPM allows to obtain less lift on the blades and, consequently, the mechanical components of the turbine 10 have not to endure excessive forces.

This behavior is not possible in the known turbines which behave as described previously on the hand of Figures 2 and 3.

In case the wind speed increases further and exceeds the speed indicated in the operating point 68 in Figure 4, the RPM are kept constant by braking the generator 44 electrically with a request for additional electric power analogous to what described previously, until the cut-out speed H of the turbine 10 according to the invention is reached progressively, which is much higher than the known turbines.

The lower lift supported by the blades allows said braking from the operating point 68 to the cut-out speed H so as to further widen the field of possible exploitation of the turbine 10 according to the invention.

Once the cut-out speed H has been reached, the controller 54 actuates consequently the two electromechanical brakes 32 in sequence so as to stop the rotor unit 16 and avoid unwanted damages.

The aerodynamic behavior of the blades 18 of the rotor unit 16 is described below to better explain the advantages of an overpower control performed according to the invention.

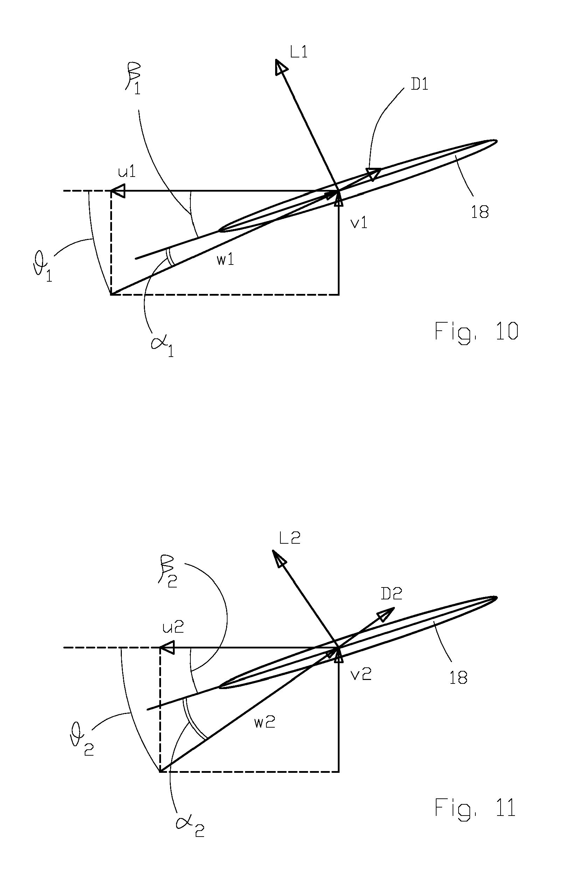

With reference to Figures 10 and 11, the conditions are described in which the section of a blade 18 is at a certain distance from the axis of rotation, this distance being maintained equal in both Figures 9 and 10.

The description of angles, forces and speeds is based on the theory B.E.M (Blade Element Method) and reports the indications utilized according to said theory. In particular, reference is made to the angle of attack with "α", the pitch angle with "β", the sum of α and β with "θ", the tangential speed of the wind to the blade with "u", the axial speed of the wind to the blade with "v", the relative speed seen from the contour of the blade 18 with "w", the lift force with "L" and the resistance force with "D". The tangential speed of the wind to the blade "u" is proportional to the RPM of the rotor unit 16.

The tangential force generating the moment on the hub 30 varies on the base of the lift force L, the resistance force D and the angle θ. As the tangential force increases, the power that the rotor unit 16 can derive from the wind W and convert into electric energy increases consequently.

As it appears from Figure 10, under conditions of a nominal wind, for instance at an undisturbed wind speed of 8 m/s, a first angle of attack α1 of a first relative speed w1 is obtained, which involves a first lift force L1 and a first resistance force D1.

The rotor unit 16 rotates at a first speed of rotation, for instance of 82 RPM involving a rated power M.

On the contrary, Figure 11 represents a situation in which the wind has increased so as to reach, for instance, an undisturbed wind speed of 11 m/s while the RPM of the turbine have been reduced as described previously.

It is possible to obtain a second angle of attack α2, a second relative speed w2 resulting from a second axial velocity of the wind v2, higher than v1, and a second tangential velocity of the wind on the blade u2, lower than u1.

In this way, it is possible to keep the power constant on reducing the speed of rotation of the turbine, for instance to 45 RPM.

On progressively following the wind increase, the triangles of speed of the air flux incident on the blade are influenced.

In particular, if the RPM are reduced, the angle of attack α increases and the efficiency of the wing contour diminishes. The increase in power available in the wind is thus compensated by a less efficiency of the turbine.

The speed control is actuated by the control unit 20 and therefore, only by the electronic management of the turbine. In this way it is possible to avoid the several mechanical actuations of the prior art, as described previously.

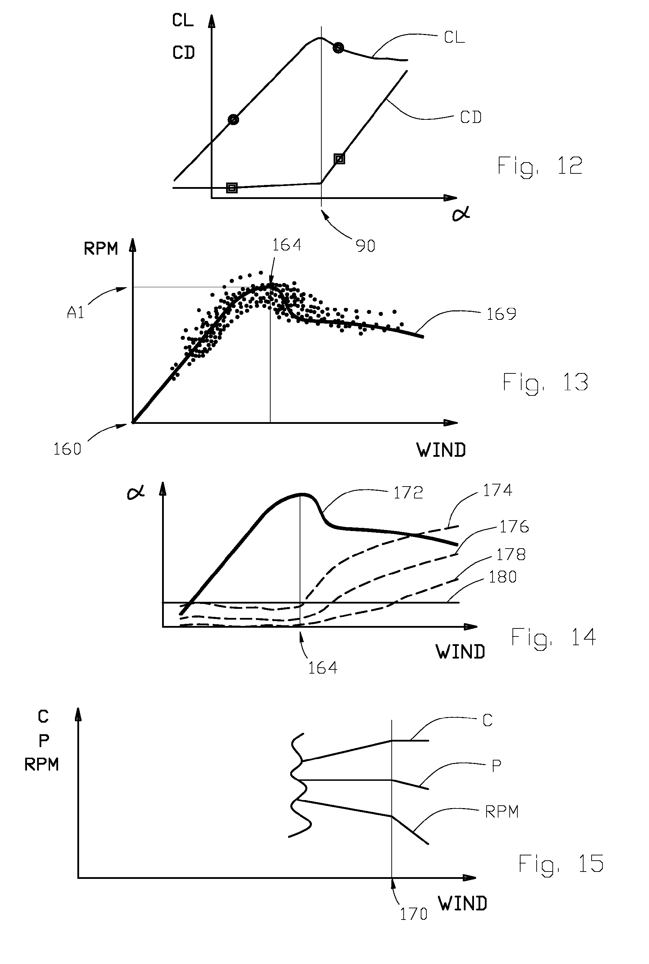

The slowdown of the rotor unit 16 on reducing the RPM and therefore, the tangential velocity of the wind on the blade u involves a reduction of the incident relative velocity w. Owing to the quadratic dependence of L and D on said parameter it is evident the influence of the forces developed on the blade. In addition, there is an increase in the angle of attack α and in general, a light loss in the efficiency (L/D). This behavior has been observed experimentally on processing the coefficients of lift and resistance as visible in Figure 12, in which the trends of the two coefficients, CL and CD, respectively, are visible with a particular reference to their sudden change of trend in correspondence of the angle of attack α, indicated by the reference number 90, beyond which the stall takes place.

Besides, the rotation of the lift and resistance forces involves an increase in the torque developed by the contour of the blade 18.

The loss in RPM is compensated by an increase in the torque which the rotor unit 16 is subjected to. Although the conversion into power worsens, the possibility that it is not necessary to immediately stop the turbine 10 in the presence of winds blowing at speeds slightly higher than the rated speed is an important advantage.

As the windiness increases, the power available in the wind W increases but the capacity of the turbine in converting said power on reducing the lift of the blade 18 diminishes.

In other terms, the power coefficient decreases because the efficiency decreases while the available power increases because the wind increases. The balance is thus kept constant over the nominal speed G of the wind.

According to a variant of the invention, a turbine may comprise a rotor unit which in turn comprises blades which have a constant section along their whole development, there being thus the advantage of having a simple construction and avoiding the variations of section and the warping of the blades disclosed by the prior art.

Besides, the turbine may be controlled without utilizing variations of magnetic flux between stator and rotor of the generator. Accordingly, the magnetic flux between stator and rotor is predetermined, for instance in order to obtain an optimal behavior on keeping the flux constant.

Below reference is made to the representation in Figure 13 in which the behavior of the turbine according to the theoretical model is indicated by a continuous line while an example of experimental data, recorded in a full day of operation, is indicated by a set of operating points.

RPM course of the rotor unit 16 as the wind speed varies is then described with reference to the aspects of differentiation compared to the control system described above.

Starting from a rest point 160, analogous to the point 60 described above, as the wind speed increases, also the RPM increase until reaching the maximum operation speed A1 in the point 164, analogously to the point 64.

In case the wind speed W continues to increase and consequently, the rotor unit 16 tends to further increase the RPM, the controller 54 has the rectifier 50 and the inverter 52 to request a quantity of current greater than the current the generator 44 can supply to the point 164.

As described previously, it is thus possible to significantly reduce the RPM of the rotor unit and consequently, of the generator by following the curve 169, as visible in Figure 13, in which a monotonous decreasing trend of the RPM is visible as the undisturbed wind speed increases so that the power supplied by the turbine is kept constant.

Said operation of the turbine is maintained through the control carried out by the controller 54 and facilitated by the progressive stall to which each blade of the rotor unit is subjected.

Said effect of progressive stall of each blade is visible in Figure 14 from which it appears the trend of the angle of attack α as the undisturbed wind speed increases, for three representative sections of a blade, each of them being at a different distance from the hub 30 of the rotor unit 16: a section, indicated by 174, is next to the hub; a section, indicated by 176, is at half-length of the blade; a section, indicated by 178, is next to the tip of the blade.

In order to facilitate the interpretation of Figure 14, also the RPM course with the reference number 172 and the stall limit angle of attack with the reference number 180 are represented.

As the undisturbed wind speed increases, it is possible to see a progressive stall of the blade starting from the sections next to the hub until reaching the sections next to the blade tip, said sections reaching the stall after the rated wind speed, indicated by the point 164.

When the section next to the hub begins to stall, it is to be noted that the sections next to the tip begins to work with optimal angles of attack. This behavior, due to the constant section for the whole length of the blade, avoids a sharp drop in the rotor torque on facilitating thus the control of the turbine. In other terms, sudden losses of power are avoided, which could make the control system unstable.

In addition, the control system of the turbine according to the invention may keep the turbine running even at speeds much higher than the rated speed of the undisturbed wind speed, as visible in Figure 5 in which the RPM course of the RPM, the course of the power indicate with P and the course of the torque indicated with C are represented, respectively, in the field of the undisturbed wind speeds higher than the rated speed.

As described above, after having exceeded the rated wind speed, for instance 8 m/s, a constant power is maintained by progressively decreasing RPM and consequently bringing the generator to withstand a torque gradually increasing, as visible in Figure 15, until reaching the operating point 170, for instance 23 m/s, in which the maximum rated torque of the generator is reached and therefore, its maximum rated current that must not be exceeded.

When the winds exceed the operating point 170, the controller 54 provides an even more sudden reduction of RPM on further slowing the turbine, for instance through torque pulses so as to maintain the operation of turbine and generator at a torque substantially equal to the maximum rated torque.

In this stretch of operation, after the operating point 170, there is a more sudden decrease in the RPM of the turbine, a decrease in the power that is no more constant, on maintaining the torque constant and further extending the operating range of the turbine according to the invention.

The turbine and the control system for controlling the overpower of said turbine according to the invention allow to obtain a turbine more flexible to the variations of the wind speed, in an automatic and simple way without adding the components of the prior art.

The braking is actuated only for a short time, for instance a few seconds, namely, the time necessary to reduce the speed of rotation and change the operating curve following a slowdown and lower aerodynamic efficiency or by means of the field weakening while according to the prior art the braking is to be maintained for a long time.

A technician of the sector may make other changes or variants to be considered as included in the scope of protection of the present invention.

## Claims

1. Control method for a turbine (10) with nominal speed (G, 64; 164) and comprising a rotor unit (16), wherein the rotor unit (16) comprises at least one blade (18) having a fixed pitch angle (ß), the rotor unit (16) being coupled to a generator (44) which in turn is controlled by a control unit (20), said control method being adapted to adjust the speed of rotation of the turbine (10) according to the speed of a wind (W) investing the rotor unit (16), comprising the following phase:
- when the rotor unit (16) is invested by a wind (W) blowing at speeds above the nominal speed (G, 64; 164), the running of the generator (44) is controlled by means of the control unit (20) by imposing a reduction of the speed of rotation of the rotor unit (16) proportional to the increase of the speed of wind (W), continuously;
**characterised in that** the following phases are comprised:
- in a first field of operation, when the rotor unit (16) is invested by a wind (W) blowing at speeds ranging from the cut-in speed (N) to the wind speed putting the rotor unit (16) in rotation at its maximum speed of rotation (A; A1), the control unit (20) imposes a determined speed of rotation of the rotor unit (16) according to the speed of wind (W) which optimizes the aerodynamic performance of the turbine (10);
- in a second field of operation, when the rotor unit (16) is invested by a wind (W) blowing at speeds ranging from the wind speed putting the rotor unit (16) in rotation at its maximum speed of rotation (A; A1, 164) to speeds higher than this, the control unit (20) requests a greater amount of electric energy to the generator (44) than the electric energy that the generator (44) can supply at that time, in order to decelerate the rotor of the generator (44) and consequently, to slow down the rotor unit (16) up to a predetermined speed of rotation, lower than the maximum speed of rotation (A) of the rotor unit (16).

2. Control method for a turbine (10) according to the preceding claim, wherein when the rotor unit (16) is invested by a wind (W) blowing at a speed exceeding the nominal speed (G, 64; 164), said at least one blade (18) is actuated according to a speed of rotation of the rotor unit (16) that reduces the lift of the at least one blade (18).

3. Control method for a turbine (10) according to one of the preceding claims, wherein when the rotor unit (16) is invested by a wind (W) having higher speeds than the nominal speed (G, 64; 164), the control unit (20) reduces the speed of rotation of the rotor unit (16) as the speed of wind (W) increases so as to keep constant the power developed by the turbine (10).

4. Control method for a turbine (10) according to one of the preceding claims, wherein when the rotor unit (16) is invested by a wind (W) having higher speeds than the nominal speed (G, 64; 164), the control unit (20) imposes a speed of rotation that keeps constant the torque to which the generator (44) is subjected so that the speed of rotation of the rotor unit (16) is reduced as the speed of wind (W) increases.

5. Control method for a turbine (10) according to the preceding claim, wherein the constant torque to which the generator (44) is subjected is close or equal to the maximum torque supported by the rotor unit (16) and/or the generator (44).

6. Control method for a turbine (10) according to claim 4 or 5, wherein the control unit (20) imposes a speed of rotation that keeps constant the torque to which the generator (44) is subjected, by means of torque pulses.

7. Control method for a turbine (10) according to one of the preceding claims, wherein the rotor unit (16) comprises at least one blade (18) having a constant section for at least one part of its length so as to have an only stall limit angle of attack (180) in all the sections and to have a progressive stall as the speed of wind (W) increases.

8. Control method for a turbine (10) according to the preceding claim, wherein as the speed of wind (W) increases, the angle of attack (α) exceeds the stall limit angle of attack (180) in sections of the at least one blade (18) that are closer and closer to its tip so that the sections of the least one blade (18) having a constant section for at least one part of its length begins stalling proportionally to the increase of the speed of wind (W).

9. Control method for a turbine (10) according to the preceding claim, wherein the sections of the at least one blade (18) are constant for its whole length.

10. Control method for a turbine (10) according to one of the preceding claims, wherein the magnetic flux between stator and rotor is predetermined and fixed so as to obtain an optimal behavior.

11. Turbine (10), adapted to provide electric energy to a network (22) by converting wind energy of the surrounding wind (W), comprising:
- a tower (14), bound to soil;
- a nacelle (12), rotatably coupled to the end of the tower (14);
- a generator (44), contained in the nacelle (12) and coupled to a rotor unit (16);
- a control unit (20), electrically connected to the generator (44) and the network (22);
said generator (44) comprising a stator and a rotor, the stator and the rotor being magnetically coupled by a magnetic flux (F);
said stator of the generator (44) being bound to the nacelle (12);
said rotor of the generator (44) being mechanically coupled to the rotor unit (16);
said rotor unit (16) being fluid-dynamically coupled with the wind (W); comprising control means (50, 52, 54) to control the speed of rotation of the rotor unit (16) according to the speed of wind investing the turbine (10), comprising at least one blade (18) having a fixed pitch angle and a constant section for its whole length, so as to obtain a progressive behavior for the whole length of the at least one blade and to have an only stall limit angle of attack, wherein as the speed of wind increases, the angle of attack exceeds the stall limit angle of attack in sections of the at least one blade that are closer and closer to its tip so that the at least one blade having a constant section begins stalling proportionally to the increase of the speed of wind.

## Patentansprüche

1. Steuermethode für eine Turbine (10) mit Nenngeschwindigkeit (G, 64; 164) und die eine Rotoreinheit (16) enthält, wobei die Rotoreinheit (16) mindestens einen Propellerflügel (18) enthält, der einen feststehenden Neigungswinkel (β) besitzt, da die Rotoreinheit (16) mit einem Generator (44) gekoppelt ist, der seinerseits von einer Steuereinheit (20) gesteuert wird, da die besagte Steuermethode in der Lage ist, die Drehgeschwindigkeit der Turbine (10) je nach der Geschwindigkeit eines Winds (W), der auf die Rotoreinheit trifft (16) zu regeln, folgende Phase enthaltend:
- wenn die Rotoreinheit (16) von einem Wind (W) getroffen wird, der mit Geschwindigkeiten oberhalb der Nenngeschwindigkeit (G, 64; 164) bläst, wird der Betrieb des Generators (44) mittels der Steuereinheit (20) durch Erzwingung einer Verringerung der Drehgeschwindigkeit der Rotoreinheit (16) im Verhältnis zur Zunahme der Geschwindigkeit des Winds (W) dauerhaft gesteuert;
**dadurch gekennzeichnet, dass** folgende Phasen enthalten sind:
- in einem ersten Betriebsbereich, wenn die Rotoreinheit (16) von einem Wind (W) getroffen wird, der zwischen der Einschaltgeschwindigkeit (N) und der Windgeschwindigkeit liegt, die die Rotoreinheit (16) mit ihrer höchsten Drehgeschwindigkeit (A; A1) drehen lässt, erzwingt die Steuereinheit (20) eine bestimmte Drehgeschwindigkeit der Rotoreinheit (16) je nach der Windgeschwindigkeit (W), die die aerodynamische Leistungsfähigkeit der Turbine (10) optimiert;
- in einem zweiten Betriebsbereich, wenn die Rotoreinheit (16) von einem Wind (W) getroffen wird, der mit Geschwindigkeiten bläst, die zwischen der Windgeschwindigkeit, die die Rotoreinheit (A; A1, 164) mit ihrer höchsten Drehgeschwindigkeit drehen lässt, und darüberliegenden Geschwindigkeiten liegt, fordert die Steuereinheit (20) eine größere Strommenge vom Generator (44) als die, die der Generator (44) in diesem Augenblick liefern kann, sodass der Rotor des Generators (44) verlangsamt und folglich die Rotoreinheit (16) auf einen vorbestimmte Drehgeschwindigkeit verlangsamt wird, die niedriger als die Höchstgeschwindigkeit (A) der Rotoreinheit (16) ist.

2. Steuermethode für eine Turbine (10) nach dem vorhergehenden Anspruch, wobei wenn die Rotoreinheit (16) von einem Wind (W) getroffen wird, der bei einer die Nenngeschwindigkeit (G, 64; 164) überschreitenden Geschwindigkeit bläst, besagter mindestens eine Propellerflügel (18) entsprechend einer Drehgeschwindigkeit der Rotoreinheit (16) betrieben wird, das den Auftrieb des mindestens einen Propellerflügels (18) verringert.

3. Steuermethode für eine Turbine (10) nach dem vorhergehenden Anspruch, wobei wenn die Rotoreinheit (16) von einem Wind (W) getroffen wird, der mit einer höheren als der Nenngeschwindigkeit (G,64; 164) bläst, die Steuereinheit (20) die Drehgeschwindigkeit der Rotoreinheit (16) mit der Zunahme der Windgeschwindigkeit (W) verringert, sodass die von der Turbine (10) erzeugte Leistung konstant gehalten wird.

4. Steuermethode für eine Turbine (10) nach einem der vorhergehenden Ansprüche, wobei wenn die Rotoreinheit (16) von einem Wind (W) getroffen wird, der mit einer höheren als der Nenngeschwindigkeit (G,64; 164) bläst, die Steuereinheit (20) eine Drehgeschwindigkeit erzwingt, die das Drehmoment, dem der Generator (44) unterworfen ist, konstant hält, sodass mit der Zunahme der Windgeschwindigkeit (W) die Drehgeschwindigkeit der Rotoreinheit (16) verringert wird.

5. Steuermethode für eine Turbine (10) nach dem vorhergehenden Anspruch, wobei das konstante Drehmoment, dem der Generator (44) unterworfen ist, nahe oder gleich dem höchsten Drehmoment ist, dem die Rotoreinheit (16) und/oder der Generator (44) unterworfen ist.

6. Steuermethode für eine Turbine (10), nach Anspruch 5 oder 6, wobei die Steuereinheit (20) eine Drehgeschwindigkeit erzwingt, die das Drehmoment, dem der Generator (44) unterworfen ist, mittels Drehmomentimpulsen konstant hält.

7. Steuermethode für eine Turbine (10) nach einem der vorhergehenden Ansprüche, wobei die Rotoreinheit (16) mindestens einen Propellerflügel (18) mit einem konstanten Querschnitt auf mindestens einem Teil seiner Länge enthält, sodass er einen einzigen Anstellwinkel der Abrissgrenze (180) in allen Abschnitten und einen zunehmenden Abriss bei zunehmender Windgeschwindigkeit (W) aufweist.

8. Steuermethode für eine Turbine (10), nach dem vorhergehenden Anspruch, wobei bei Zunahme der Windgeschwindigkeit (W) der Anstellwinkel (α) den Anstellwinkel der Abrissgrenze (180) in Abschnitten des mindestens einen Propellerflügels (18), die dessen Spitze immer näher sind, übersteigt, sodass die Abschnitte des mindestens einen Propellerflügels (18) mit einem konstanten Querschnitt auf mindestens einem Teil seiner Länge im Verhältnis zur Zunahme der Windgeschwindigkeit (W) beginnen, abzureißen.

9. Steuermethode für eine Turbine (10), nach dem vorhergehenden Anspruch, wobei die Querschnitte des mindestens einen Propellerflügels (18) auf seiner ganzen Länge konstant sind.

10. Steuermethode für eine Turbine(10) nach einem der vorhergehenden Ansprüche, wobei der magnetische Fluss zwischen Stator und Rotor vorbestimmt und fest ist, um ein optimales Verhalten zu erhalten.

11. Turbine (10), geeignet, einem Netz (22) Strom zu liefern, indem sie Windenergie aus dem umgebenden Wind (W) umwandelt, bestehend aus:
- ein Turm (14), am Erdboden befestigt;
- eine drehbare Gondel (12) an der Spitze des Turms (14);
- ein Generator (44), in der Gondel (12) enthalten und mit einer Rotoreinheit (16) verbunden;
- eine Steuereinheit (20), elektrisch mit den Generator (44) und dem Netz (22) verbunden;
besagter Generator (44) enthält einen Stator und einen Rotor, die magnetisch durch einen magnetischen Fluss (F) gekoppelt sind;
besagter Stator des Generators (44) ist mit mit der Gondel (12) verbunden; besagter Rotor des Generators (44) ist mechanisch mit der Rotoreinheit (16) verbunden;
besagte Rotoreinheit (16) ist strömungsdynamisch mit dem Wind (W) gekoppelt;
beinhaltend Steuermittel (50, 52, 54) zur Steuerung der Geschwindigkeit der Rotoreinheit (16) je nach der Geschwindigkeit des Winds, der auf die Turbine (10) trifft,
beinhaltend mindestens einen Propellerflügel (18) mit einem festen Neigungswinkel und einem konstanten Querschnitt auf seiner gesamten Länge, sodass ein stufenweises Verhalten für die gesamte Länge des mindestens einen Propellerflügels erhalten wird und dieser nur einen einzigen Anstellwinkel der Abrissgrenze aufweist,
wobei bei Zunahme der Windgeschwindigkeit der Anstellwinkel den Anstellwinkel der Abrissgrenze in Abschnitten des mindestens einen Propellerflügels, die dessen Spitze immer näher sind, übersteigt, sodass die Abschnitte des mindestens einen Propellerflügels mit einem konstanten Querschnitt im Verhältnis zur Zunahme der Windgeschwindigkeit beginnen, abzureißen.

## Revendications

1. Méthode de contrôle pour une turbine (10) à une vitesse nominale (G, 64; 164) et comprenant une unité de rotor (16), dans laquelle l'unité de rotor (16) comprend au moins une lame (18) ayant un angle de pas fixe (β), l'unité de rotor (16) étant couplée à un générateur (44) qui à son tour est commandé par une unité de commande (20), ladite méthode de contrôle étant adaptée pour ajuster la vitesse de rotation de la turbine (10) selon la vitesse d'un vent (W) investissant l'unité de rotor (16), comprenant la phase suivante :
- lorsque l'unité de rotor (16) est investie par le souffle d'un vent (W) à une vitesse supérieure à la vitesse nominale (G, 64; 164), le fonctionnement du générateur (44) est commandé au moyen de l'unité de commande (20) en imposant une diminution de la vitesse de rotation de l'unité de rotor (16) proportionnelle à l'augmentation de la vitesse du vent (W), de manière continue;
**caractérisée par le fait que** les étapes suivantes sont comprises :
- dans un premier champ de fonctionnement, lorsque l'unité de rotor (16) est investie par le souffle d'un vent (W) à des vitesses allant de la vitesse de conjonction (N) à la vitesse du vent en mettant l'unité de rotor (16) en rotation à sa vitesse maximale de rotation (A; A1), l'unité de commande (20) impose une vitesse de rotation déterminée de l'unité de rotor (16) en fonction de la vitesse du vent (W) qui optimise les performances aérodynamiques de la turbine (10) ;
- dans un deuxième champ de fonctionnement, lorsque l'unité de rotor (16) est investie par un vent (W) soufflant à des vitesses allant de la vitesse du vent en mettant l'unité de rotor (16) en rotation à sa vitesse maximale de rotation (A; A1, 164) aux vitesses plus élevées que cela, l'unité de contrôle (20) demande une plus grande quantité d'énergie électrique au générateur (44) que l'énergie électrique que le générateur (44) peut fournir à ce moment afin de ralentir le rotor du générateur (44) et, par conséquent, pour décélérer l'unité de rotor (16) jusqu'à une vitesse de rotation prédéterminée, inférieure à la vitesse maximum de rotation (A) de l'unité de rotor (16).

2. Méthode de contrôle pour une turbine (10) selon la revendication précédente, dans laquelle lorsque l'unité de rotor (16) est investie par le souffle d'un vent (W) à une vitesse supérieure à la vitesse nominale (G, 64; 164), au moins une lame (18) est actionnée selon une vitesse de rotation de l'unité de rotor (16) qui réduit la portance d'au moins une lame (18).

3. Méthode de contrôle pour une turbine (10) selon la revendication précédente, dans laquelle lorsque l'unité de rotor (16) est investie par le vent (W) ayant des vitesses supérieures à la vitesse nominale (G, 64; 164), l'unité de commande (20) réduit la vitesse de rotation de l'unité de rotor (16) alors que la vitesse du vent (W) augmente de façon à maintenir constante la puissance développée par la turbine (10).

4. Méthode de contrôle pour une turbine (10) selon une des quelconques revendications précédentes, dans laquelle, lorsque l'unité de rotor (16) est investie par le vent (W) ayant des vitesses supérieures à la vitesse nominale (G, 64; 164), l'unité de commande (20) impose une vitesse de rotation qui maintient constant le couple auquel le générateur (44) est soumis de sorte que la vitesse de rotation de l'unité de rotor (16) est réduite lorsque la vitesse du vent (W) augmente.

5. Méthode de contrôle pour une turbine (10) selon la revendication précédente, dans laquelle le couple constant pour lequel le générateur (44) est soumis est proche ou égal au couple maximum pris en charge par l'unité de rotor (16) et/ou le générateur (44).

6. Méthode de contrôle pour une turbine (10) selon la revendication 5 ou 6, dans laquelle l_{'}unité de commande (20) impose une vitesse de rotation qui maintient constant le couple auquel le générateur (44) est soumis, au moyen d_{'}impulsions de couple.

7. Méthode de contrôle pour une turbine (10) selon une des quelconques revendications précédentes, dans laquelle l'unité de rotor (16) comprend au moins une lame (18) ayant une section constante pour au moins une partie de sa longueur de manière à avoir un seul angle limite d_{'}attaque de décrochage (180) dans toutes les sections et d'avoir un décrochage progressif alors que la vitesse du vent (W) augmente.

8. Méthode de contrôle pour une turbine (10) selon la revendication précédente, dans laquelle lorsque la vitesse du vent (W) augmente, l'angle d'attaque (α) est supérieur à l'angle limite d'attaque de décrochage (180) dans les sections d'au moins une lame (18) qui sont plus proches et plus près de sa pointe de sorte que les sections d'au moins une lame (18) ayant une section constante pour au moins une partie de sa longueur commence en décrochant proportionnellement à l'augmentation de la vitesse du vent (W).

9. Méthode de contrôle pour une turbine (10) selon la revendication précédente, dans laquelle les sections d'au moins une lame (18) sont constantes sur toute sa longueur.

10. Méthode de contrôle pour une turbine (10) selon une des quelconques revendications précédentes, dans laquelle le flux magnétique entre le stator et le rotor est prédéterminé et fixé de manière à obtenir un comportement optimal.

11. Turbine (10), adaptée pour fournir de l'énergie électrique à un réseau (22) en convertissant l'énergie éolienne du vent environnant (W), comprenant :
- une tour (14), fixée au sol ;
- une nacelle (12), couplée de manière rotative à l'extrémité de la tour (14) ;
- un générateur (44), contenu dans la nacelle (12) et couplé à une unité de rotor (16) ;
- une unité de commande (20), reliée électriquement au générateur (44) et au réseau (22) ;
ledit générateur (44) comprenant un stator et un rotor, le stator et le rotor étant couplés magnétiquement par un flux magnétique (F) ;
ledit stator du générateur (44) étant fixé à la nacelle (12) ;
ledit rotor du générateur (44) étant couplé mécaniquement à l'unité du rotor (16) ;
ladite unité de rotor (16) ayant un couplage fluide-dynamique avec le vent (W) ;
comprenant des moyens de commande (50, 52, 54) pour contrôler la vitesse de rotation de l'unité de rotor (16) en fonction de la vitesse du vent qui investit la turbine (10),
comprenant au moins une lame (18) ayant un angle de pas fixe et une section constante sur toute sa longueur de manière à obtenir un comportement progressif sur toute la longueur d'au moins une lame et d'avoir un seul angle limite d'attaque de décrochage,
dans laquelle lorsque la vitesse du vent augmente, l'angle d'attaque est supérieur à l'angle limite d'attaque de décrochage dans les sections d'au moins une lame qui sont plus proches et plus près de sa pointe de sorte que les sections d'au moins une lame ayant une section constante commence en décrochant proportionnellement à l'augmentation de la vitesse du vent.
